# EUROPÄISCHE PATENTSCHRIFT

(11) **EP 0 835 799 B1**
(45) Veröffentlichungstag und Bekanntmachung des Hinweises auf die Patenterteilung: **12.03.2003**
(21) Anmeldenummer: 97114720.2
(22) Anmeldetag: 26.08.1997
(51) Int. Cl.: B62D 33/02

(54) **Verdecksystem für Nutzfahrzeuge**
Top system for utility vehicles
Système de toit pour véhicules utilitaires

(30) Priorität: 08.10.1996 DE 29617284 U
(43) Veröffentlichungstag der Anmeldung: 15.04.1998
(73) Patentinhaber: Edscha LKW-Schiebeverdecke GmbH, 42855 Remscheid (DE)
(72) Erfinder: Fliege, Dieter, 42855 Remscheid (DE)
(74) Vertreter: Sparing, Rolf Klaus

(56) Entgegenhaltungen:
- FR-A- 2 415 552
- GB-A- 1 230 296

## Beschreibung

Die Erfindung betrifft ein Verdecksystem für Nutzfahrzeuge, insbesondere ein zusammenschiebbares Verdeck für Fahrzeugaufbauten und Container.

FR-A-2 415 552 beschreibt ein zusammenschiebbares Verdeck für Fahrzeugaufbauten, bei dem mehrere die Verdeckplane tragende Spriegel vermittels Rollenwagen an zwei übereinanderliegend angeordnete Laufbahnen aufweisenden oberen Längsgurte des Verdeckgestells verschieblich geführt sind, während die die oberen Längsgurte des Verdeckgestells abstützenden Rungen starr an diese angeschlossen sind und im Bedarfsfall abgeschlagen werden müssen.

GB-A-1 230 296 beschreibt ein zusammenschiebbares Verdeck für Fahrzeugaufbauten, dessen die oberen Längsgurte des Verdeckgestells bildenden Längsträger zwei übereinanderliegend angeordnete Laufbahnen aufweisen, bei dem die obere Laufbahn der Längsgurte der Abstützung der die Verdeckplane tragende Spriegel und die untere Laufbahn der Längsgurte der verschieblichen Aufhängung von Seitenwandteilen des Verdeckes zugeordnet ist, während die Pfosten starr angeordnet sind.

Es ist die Aufgabe der Erfindung, ein Verdecksystem zu schaffen, das in einfacher, raum- und gewichtssparender Bauweise die nutzbare Breite des Laderaums verbessert.

Diese Aufgabe wird erfindungsgemäß mit den Merkmalen des Anspruchs 1 gelöst.

Die Erfindung schafft bei einfachster und raum- und gewichtssparendster Ausbildung der oberen Längsgurte eine größtmögliche Nutzbarkeit der Laderaumbreite zu erreichen, ohne Einbußen an Steifigkeit des Verdecks insgesamt oder an Leichtgängigkeit der beweglichen Verdeckteile hinnehmnen zu müssen.

Dadurch wird eine in Querrichtung des Laderaumes äußerst schmalbauende und damit die verfügbare Laderaumbreite so wenig als irgend möglich beeinträchtigende Ausbildung der oberen Längsgurte eines zusammenschiebbaren Verdeckes für Fahrzeugaufbauten oder Container erreicht, ohne gleichzeitig Einbußen an Stabilität des gesamten Verdecksystemes, vor allem im geschlossenen Zustand und damit während des Fahrbetriebes, hinnehmen zu müssen. Besonders vorteilhaft ist es, wenn die Laufbahnen für die die Spriegel, die die Rungen und die die Seitenplanen abstützenden Rollen wenigstens annähernd in einer vertikalen Ebene übereinanderliegend ausgerichtet an den oberen Längsgurten angeordnet sind.

Eine grundsätzliche Möglichkeit zur Verwirklichung eines der vorgenannten Aufgabenstellung gerecht werdenden Verdecksystemes zeichnet sich darüber hinaus ferner dadurch aus, daß die oberen Längsgurte des Verdeckgestelles eine in eine im Wesentlichen U-oder C-förmige Querschnittskontur integrierte Hohlprofilform aufweisen.

Eine zweckmäßige Gestaltung der oberen Längsgurte eines zusammenschiebbaren Verdeckes kann sich dabei ferner dadurch auszeichnen, daß die Hohlprofilform im Profilgrund der im wesentlichen U-oder C-förmige Querschnittskontur der oberen Längsgurte angeordnet ist und die Laufbahnen für die die Spriegel, die die Rungen und die die Seitenplanen abstützenden Rollen bildende Lauf-und Führungsschienen an die senkrecht zum Profilgrund gerichteten Profilstege der im Wesentlichen U-oder C-förmige Querschnittskontur angeschlossen sind.

Dabei kann für die Ausstattung der oberen Längsgurte des Verdeckgestelles. ohne eine unerwünschte Verbreiterung in Kauf nehmen zu müssen, in vorteilhafter Weise ferner auch noch vorgesehen werden, daß die Spriegel, die Rungen und die Seitenplanen jeweils über Rollenpaare an zwei einander bezüglich der vertikalen Längsmittelebene des Querschnittsprofiles der oberen Längsgurte gegenüberliegenden Laufbahnen von Lauf-und Führungsschienen abgestützt sind, insbesondere in der Weise, daß eine der beiden der Abstützung der Rungen und der Aufhängung der Seitenplanen dienenden Lauf-und Führungsschienen bezüglich der U-bzw. C-förmigen Querschnittskontur der oberen Längsgurte innenliegend angeordnet ist.

Unabhängig von der im Einzelnen gewählten Gestaltungsform der oberen Längsgurte ist jedoch zweckmäßigerweise immer vorgesehen, daß die der Abstützung der Spriegel zugeordnete Lauf-und Führungsschiene bezüglich der im wesentlichen U-oder C-förmige Querschnittskontur der oberen Längsgurte außenliegend an deren oberem Profilsteg angeordnet ist.

Gemäß einer ersten Ausgestaltungsform eines zusammenschiebbaren Verdeckes der hier in Rede stehenden Bauart kann im Übrigen vorgesehen sein, daß die der Abstützung der Rungen zugeordnete Lauf-und Führungsschiene bezüglich der im wesentlichen U-oder C-förmige Querschnittskontur der oberen Längsgurte außenliegend an deren unterem Profilsteg angeordnet ist.

In Verbindung mit einer derartigen Anordnung der der Abstützung der Rungen zugeordneten Lauf-und Führungsschiene ist bei einer mit der offenen Seite ihrer U-oder C-förmigen Querschnittskontur bezüglich des Laderaumes nach außen zeigenden Anordnung der oberen Längsgurte dann weiter vorgesehen, daß die der Aufhängung der Seitenplanen zugeordnete Lauf-und Führungsschiene bezüglich der im wesentlichen U-oder C-förmige Querschnittskontur der oberen Längsgurte innenliegend an derem oberem Profilsteg angeordnet ist, wobei sich eine besonders zweckmäßige Ausgestaltung dadurch ergibt, daß die der Aufhängung der Seitenplanen zugeordnete Lauf-und Führungsschiene bezüglich der im wesentlichen U-oder C-förmige Querschnittskontur der oberen Längsgurte diagonal ausgerichtet an derem oberem Profilsteg angeordnet ist.

Bezüglich der Ausbildung der Abstützung bzw. Aufhängung der beweglichen Teile an den oberen Längsgurten beläßt das erfindungsgemäße System dem Konstrukteur weitgehenden Gestaltungsfreiheit, so daß in einer ersten Gestaltungsform vorgesehen werden kann, daß die Spriegel, die Rungen und die Seitenplanen jeweils über Paare zueinander koaxial ausgerichteter Rollen an den Laufbahnen der an den oberen Längsgurten angeordneten Lauf-und Führungsschienen abgestützt bzw. aufgehängt sind.
In einer weiteren Teilausgestaltungsform kann aber alternativ auch vorgesehen werden, daß die beiden der Abstützung der Spriegel zugeordneten Rollen um zueinander in einem Winkel ausgerichtete Achsen rotierend angeordnet und diesen Rollen an den Lauf-und Führungsschienen komplementär ausgebildete Laufbahnen zugeordnet sind; dabei kann in einer einfachsten Ausführungsform vorgesehen werden, daß die beiden der Abstützung der Spriegel zugeordneten Rollen um zueinander in einem Winkel von 90° ausgerichtete Achsen rotierend angeordnet und diesen Rollen an T-förmigen Lauf-und Führungsschienen aufeinander senkrecht stehende Laufbahnen zugeordnet sind.

In einer vorteilhaften Weiterbildung ist dabei jedoch vorgesehen, daß die beiden der Abstützung der Spriegel zugeordneten Rollen um zueinander in einem Winkel von weniger als 90° ausgerichtete Achsen rotierend angeordnet sind, wobei die Achse der die vertikale Abstützung der Spriegel bildenden Rolle gegenüber der Horizontalen geneigt ausgerichtet ist und wobei die dieser Rolle zugeordnete Laufbahn der zugehörigen Lauf-und Führungsschiene komplementär schräg zur vertikalen Längsmittelebene der Querschnittskontur der oberen Längsgurte ausgerichtet ist, was den Vorteil mit sich bringt, daß über die Rollen nicht nur vertikale und horizontale, sondern auch zusätzliche Querkräfte gegen die Längsgurte abgestützt werden können, ohne hierfür eine dritte Rolle in Kauf nehmen zu müssen.

Für eine solche Gestaltungsform der Abstützung der Spriegel, sowohl in vertikaler als auch in Querrichtung, ist es dabei hinreichend, daß die den der Abstützung der Spriegel dienenden Rollen zugeordnete Lauf-und Führungsschiene C-förmig ausgebildet ist und mit dem Rücken ihrer Profilform die Laufbahn für eine um eine vertikale Achse rotierende Stützrolle bildet und mit ihrem obenliegenden freien Profilschenkel die Tragrolle übergreift.
In einer an sich bekannten Vervollkommnung der Ausgestaltung eines zusammenschiebbaren Verdeckes ist weiterhin vorgesehen, daß an die die oberen Längsgurte des Verdeckgestelles bildenden, im Wesentlichen U-oder C-förmige Querschnittskontur bezüglich des Laderaumes außenliegend eine eine nutförmige Einbuchtung zur Aufnahme einer Dichtung aufweisende Profilleiste angeschlossen ist.

Gemäß einer anderen,je nach Anwendungsfall nicht weniger zweckmäßigen anderen Ausgestaltungsform eines zusammenschiebbaren Verdeckes kann aber auch vorgesehen werden, daß die oberen Längsgurte mit der offenen Seite ihrer U-oder C-förmigen Querschnittskontur bezüglich des Laderaumes nach innen zeigend angeordnet sind und die der Abstützung der Rungen zugeordnete Lauf-und Führungsschiene bezüglich der im wesentlichen U-oder C-förmigen Querschnittskontur der oberen Längsgurte innenliegend an derem unterem Profilsteg angeordnet ist.
Die Rungen können bei dieser Ausgestaltungsform über Rollen hängend an einer an der Oberseite des unteren Profilsteges der die Längsgurte bildenden U-oder C-förmigen Querschnittskontur ausgebildeten Führungsschiene aufgehängt und mittels den Rollen gegenüberliegend angeordneter Gleiter aus einem Kunststoffmaterial gegen die Unterseite des unteren Profilsteges der die Längsgurte bildenden U-oder C-förmigen Querschnittskontur abgestützt sein, wobei den Gleitern ein zusätzlicher vertikal gerichteter Profilsteg als Seitenabstützung in Querrichtung zugeordnet sein kann.

Im Zusammenhang mit einer solchen Ausgestaltungsform eines zusammenschiebbaren Verdeckes kann es zudem vorteilhaft sein, daß die Rungen über um zueinander in einem Winkel, insbesondere einem Winkel von 90°, zueinander ausgerichtete Achsen rotierende Rollen an einer bezüglich deren Querschnittskontur innenliegend angeordneten Führungsschiene der oberen Längsgurte geführt sind.

In einer Abwandlung dieser Ausgestaltungform eines zusammenschiebbaren Verdeckes kann aber auch vorgesehen sein, daß die Rungen über Gleiter aus einem Kunststoffmaterial gegen die bezüglich des Laderaumes innenliegende Unterkante einer an den unteren Profilschenkel der Querschnittskontur der oberen Längsgurte angeschlossenen Lauf-und Führungsschiene für die Aufhängung der Seitenplanen abgestützt sind.

Unabhängig von der jeweils gewählten Ausgestaltungs-oder Abwandlungsform der Ausbildung eines zusammenschiebbaren Verdeckes ist nach einem wesentlichen Merkmal der Erfindung vorgesehen, daß die die oberen Längsgurte des Verdeckgestelles bildende, eine im Wesentlichen U-oder C-förmige Querschnittskontur und eine integrierte Hohlprofilform aufweisende Trägerstruktur als Strangpressprofil ausgebildet ist.

Dabei kann weiter vorgesehen sein, daß die die oberen Längsgurte des Verdeckgestelles bildende, eine im Wesentlichen U-oder C-förmige Querschnittskontur und eine integrierte Hohlprofilform aufweisende Trägerstruktur zusammen mit den der Aufhängung und Abstützung für die Spriegel, die Rungen und die Seitenplanen als einheitliches Strangpressprofil ausgebildet ist.

Abweichend von der letztgenannten Ausführungsform kann aber auch vorgesehen sein, daß die die oberen Längsgurte des Verdeckgestelles bildende, eine im Wesentlichen U-oder C-förmige Querschnittskontur aufweisende Tragerstruktur als Strangpressprofil ausgebildet und mittels eines angeschlossenen eigenständigen Hohlprofiles ausgesteift ist.
Im weiteren Verfolg einer zusammengesetzten Ausbildung der die oberen Längsgurte des Verdeckgestelles bildenden Trägerstruktur kann weiterhin noch vorgesehen sein, daß an die die oberen Längsgurte des Verdeckgestelles bildende, eine im Wesentlichen U-oder C-förmige Querschnittskontur aufweisende, durch ein Strangpressprofil gebildete Trägerstruktur durch Profilmaterialabschnitte gebildete Lauf-und Führungsschienen wenigstens für die der Abstützung der Spriegel zugeordneten Rollen angeschlossen sind.

Schließlich umfaßt der Rahmen der vorliegenden Erfindung auch Ausgestaltungsformen, bei denen vorgesehen ist, daß die Spriegel und/oder die Rungen sowie gegebenenfalls die Seitenplanen über mit jeweils zwei Paaren von Rollen ausgestattete Rollenwagen an den Lauf-und Führungsschienen der oberen Längsgurte abgestützt und aufgehängt sind.

Die Erfindung ist in der nachfolgenden Beispielsbeschreibung anhand einiger in den Zeichnungen dargestellter Ausführungsbeispiele im Einzelnen beschrieben.
- Fig. 1: zeigt eine Schnittdarstellung einer ersten Ausführungsform eines oberen Längsträgers für ein Verdecksystem für Nutzfahrzeuge.
- Fig. 2: zeigt eine Teilschnittdarstellung einer gegenüber Fig. 1 abgewandelten Gestaltungsform,
- Fig. 3: zeigt eine Schnittdarstellung einer zweiten Ausführungsform eines oberen Längsträgers für ein Verdecksystem für Nutzfahrzeuge.
- Fig. 4: zeigt eine Teilschnittdarstellung einer abgewandelten Gestaltungsform zu Fig 3.
- Fig. 5: zeigt eine Schnittdarstellung einer dritten Ausführungsform eines oberen Längsträgers für ein Verdecksystem für Nutzfahrzeuge.
- Fig. 6: zeigt eine Schnittdarstellung einer vierten Ausführungsform eines oberen Längsträgers für ein Verdecksystem für Nutzfahrzeuge .
- Fig. 7: zeigt eine Schnittdarstellung einer fünften Ausführungsform eines oberen Längsträgers für ein Verdecksystem für Nutzfahrzeuge.

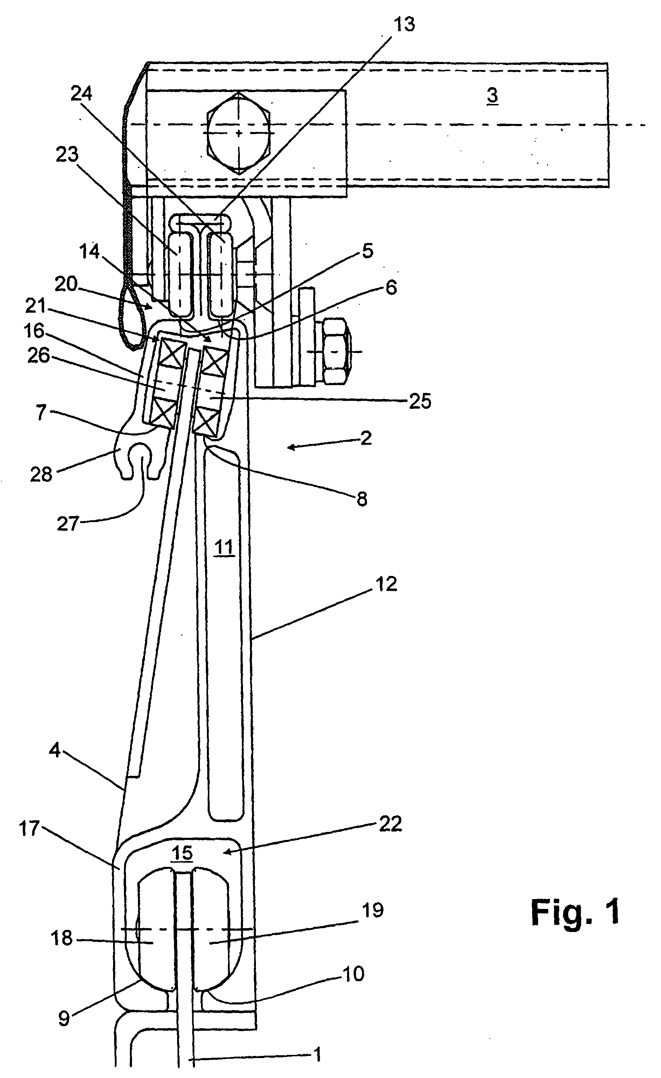

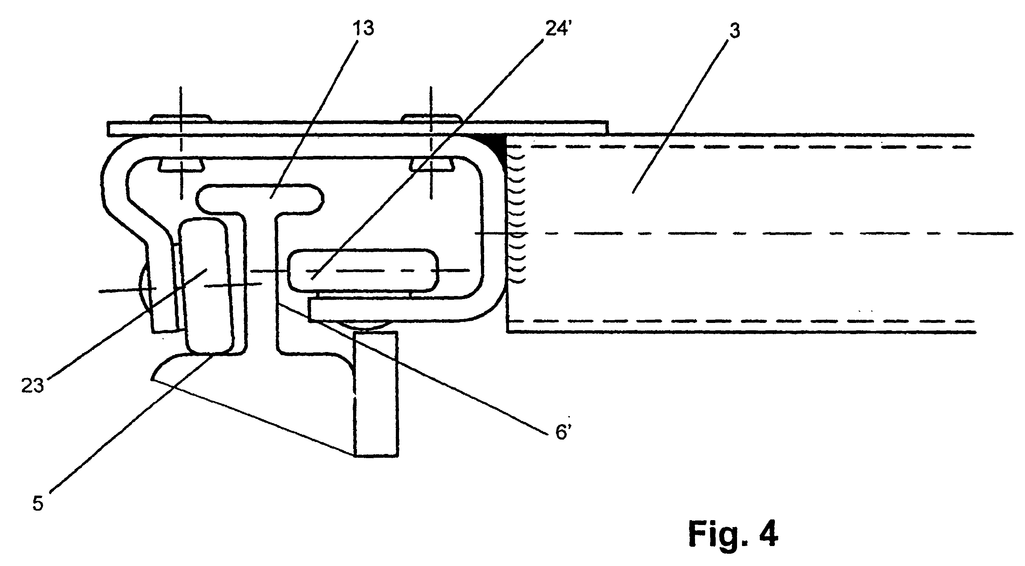

Bei einem in seiner Gesamtheit nicht dargestellten zusammenschiebbaren Verdeck für Fahrzeugaufbauten und Container, besteht das Verdeckgestell in der Hauptsache aus die Laderaumlänge überspannenden, über aufragende Stützen und Rungen 1 gegen das Fahrzeugchassis abgestützten oberen Längsgurten 2, wobei eine Dachabdeckung, insbesondere eine Plane abstützende, bei geschlossenem Verdeck zugleich eine Queraussteifung des oberen Bereiches des Verdeckgestelles bewirkende, in Fahrzeuglängsrichtung verschiebliche Spriegel 3 an den oberen Längsgurten 2 abgestützt und die oberen Längsgurte 2 ihrerseits über eine Anzahl in Fahrzeuglängsrichtung längsverschieblicher Rungen 1 zusätzlich gegen das Fahrzeugchassis abgestützt sind, bei dem ferner die Seitenplanen 4 längsverschieblich an den oberen Längsgurten 2 aufgehängt sind. Die Laufbahnen 5, 6, 7,8 und 9,10 für die die Spriegel 3, die die Rungen 1 und die die Seitenplanen 4 abstützenden Rollen sind übereinanderliegend an den oberen Längsgurten 2 angeordnet, wobei die Laufbahnen 5, 6, 7,8 und 9,10 in einer vertikalen Ebene übereinanderliegend ausgerichtet an den oberen Längsgurten 2 angeordnet sind. Die oberen Längsgurte 2 des Verdeckgestelles weisen in allen gezeigten Ausführungsformen eine im Wesentlichen U-oder C-förmige Querschnittskontur und eine in diese integrierte Hohlprofilform 11 auf, wobei sich die in Fig. 1 bis 5 und 7 gezeigten Ausführungsformen dadurch auszeichnen, daß die Hohlprofilform 11 im Profilgrund 12 der im wesentlichen U-oder C-förmigen Querschnittskontur der oberen Längsgurte 2 angeordnet ist und die Laufbahnen 5, 6, 9,10 und 7,8 für die die Spriegel 3, die die Rungen 1 und die die Seitenplanen 4 abstützenden Rollen bildende Lauf-und Führungsschienen 13, 15 und 14 an die senkrecht zum Profilgrund 12 gerichteten Profilstege 16 und 17 der im Wesentlichen U-oder C-förmigen Querschnittskontur angeschlossen sind.

Gemäß der in Fig. 1 dargestellten Ausführungsform sind die Spriegel 3, die Rungen 1 und die Seitenplanen 4 jeweils über Rollenpaare 23/24, 18/19 und 26/25 an zwei einander bezüglich der vertikalen Längsmittelebene des Querschnittsprofiles der oberen Längsgurte 2 gegenüberliegenden Laufbahnen 5/6, 9/10 und 7/8 von Lauf-und Führungsschienen 20, 22 und 21 abgestützt, in der Weise, daß eine der beiden der Abstützung der Rungen 1 und der Aufhängung der Seitenplanen 4 dienenden Lauf-und Führungsschienen 21 bezüglich der U-bzw. C-förmigen Querschnittskontur der oberen Längsgurte 2 innenliegend angeordnet ist. Bei allen im Ausführungsbeispiel gezeigten Ausführungsformen ist vorgesehen, daß die der Abstützung der Spriegel 3 zugeordnete Lauf-und Führungsschiene 20 bezüglich der im wesentlichen U-oder C-förmigen Querschnittskontur der oberen Längsgurte 2 außenliegend an deren oberem Profilsteg 16 angeordnet ist. Die der Abstützung der Rungen 1 zugeordnete Lauf-und Führungsschiene 22 ist bezüglich der im wesentlichen U-oder C-förmigen Querschnittskontur der oberen Längsgurte außenliegend an deren unterem Profilsteg 17 angeordnet.

Bei der in den Figuren 1 bis 4 und 7 dargestellten , mit der offenen Seite ihrer U-oder C-förmigen Querschnittskontur bezüglich des Laderaumes nach außen zeigenden Anordnung der oberen Längsgurte 2 ist die der Aufhängung der Seitenplanen 4 zugeordnete Lauf-und Führungsschiene 21 bezüglich der im wesentlichen U-oder C-förmigen Querschnittskontur der oberen Längsgurte 2 innenliegend an derem oberem Profilsteg 16 angeordnet, wobei sich die in Fig. 1 bis 4 dargestellte Ausführungsform besonders dadurch auszeichnet, daß die der Aufhängung der Seitenplanen 4 zugeordnete Lauf-und Führungsschiene 21 bezüglich der im wesentlichen U-oder C-förmige Querschnittskontur der oberen Längsgurte 2 diagonal ausgerichtet an derem oberem Profilsteg 16 angeordnet ist.

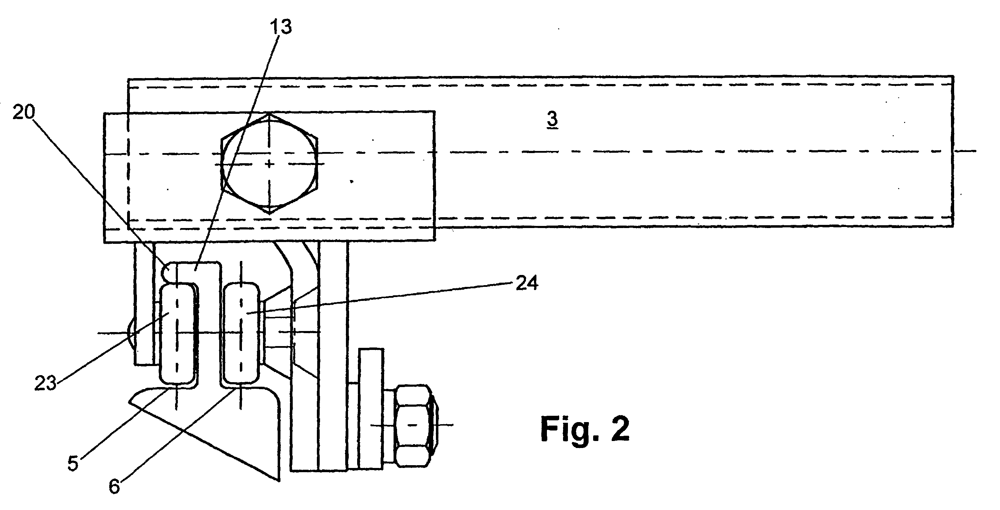

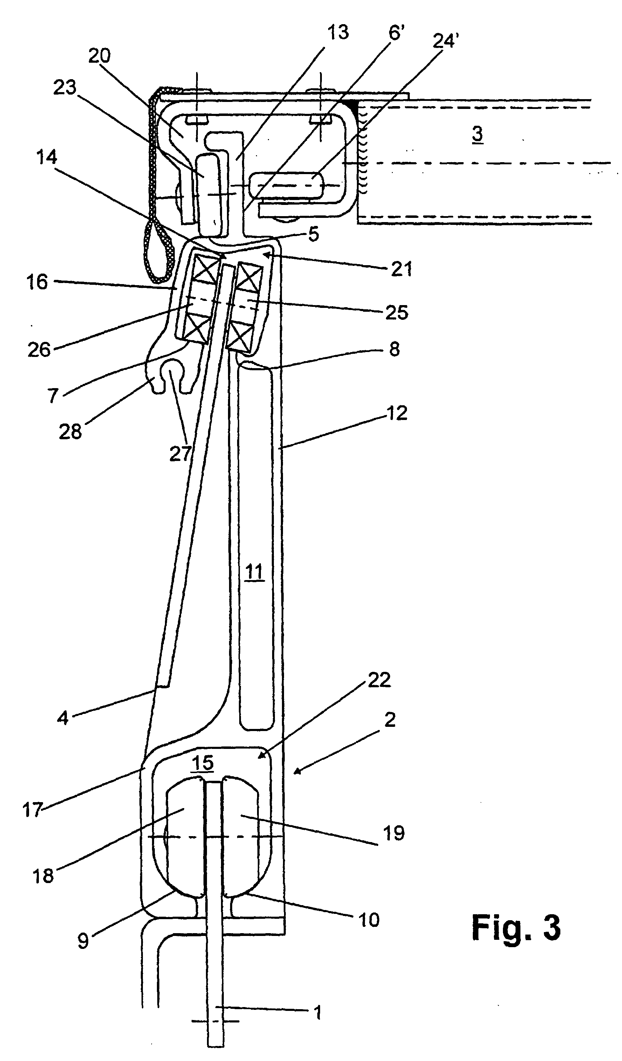

Gemäß der Ausführungsform nach Fig. 1 und 2 sind die Spriegel 3, die Rungen 1 und die Seitenplanen 4 jeweils über Paare zueinander koaxial ausgerichteter Rollen 23/24, 18/19 und 26/25 an den Laufbahnen 5/6, 9/10 und 7/8 der an den oberen Längsgurten 2 angeordneten Lauf-und Führungsschienen 20, 22 und 21 abgestützt bzw. aufgehängt. Gemäß der abgewandelten Ausführungsform nach Fig. 3 und 4 bzw. 7 sind die beiden der Abstützung der Spriegel 3 zugeordneten Rollen 23/24 um zueinander in einem Winkel von weniger als 90° ausgerichtete Achsen rotierend angeordnet und sind diesen Rollen 23/24 an den Lauf-und Führungsschienen 20 komplementär ausgebildete Laufbahnen 5 und 6' zugeordnet.
Dabei ist gemäß den Ausführungsformen nach Fig. 2, 3 und 7 vorgesehen, daß die den der Abstützung der Spriegel 3 dienenden Rollen 23 zugeordnete Lauf-und Führungsschiene 20 C-förmig ausgebildet ist und mit dem Rücken 25 ihrer Profilform die Laufbahn 6' für eine um eine vertikale Achse rotierende Stützrolle 24' bildet und mit ihrem obenliegenden freien Profilschenkel 26 die Tragrolle 23 übergreift.

In einer an sich bekannten Vervollkommnung der Ausgestaltung eines zusammenschiebbaren Verdeckes ist weiterhin vorgesehen, daß an die die oberen Längsgurte 2 des Verdeckgestelles bildenden, im Wesentlichen U-oder C-förmige Querschnittskontur bezüglich des Laderaumes außenliegend eine eine nutförmige Einbuchtung 27 zur Aufnahme einer Dichtung aufweisende Profilleiste 28 angeschlossen ist.

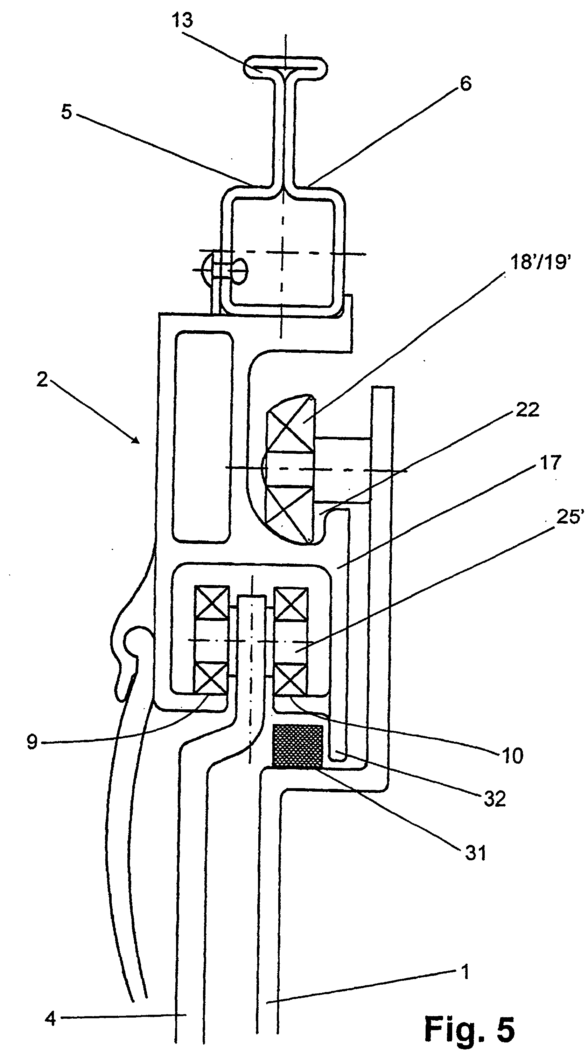

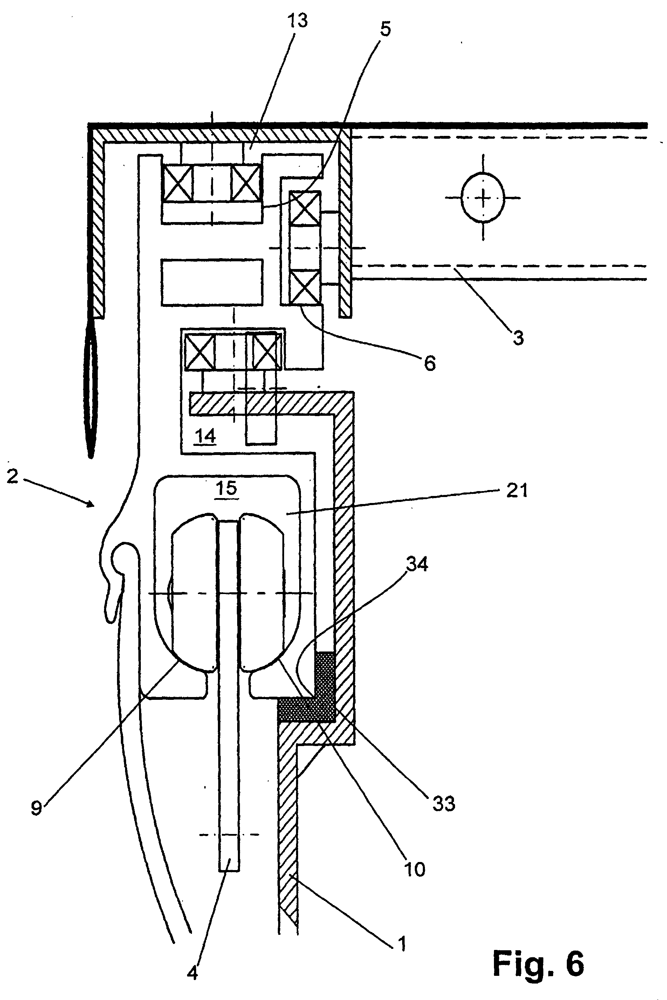

Gemäß den in Fig. 5 und 6 dargestellten Ausführungsformen sind die oberen Längsgurte 2 mit der offenen Seite ihrer U-oder C-förmigen Querschnittskontur bezüglich des Laderaumes nach innen zeigend angeordnet und ist die der Abstützung der Rungen 1 zugeordnete Lauf-und Führungsschiene 13 bezüglich der im wesentlichen U-oder C-förmigen Querschnittskontur der oberen Längsgurte 2 innenliegend an derem unterem Profilsteg 17 angeordnet. Die Rungen 1 sind bei dieser Ausgestaltungsform über Rollen 18'/19' hängend an einer an der Oberseite des unteren Profilsteges 17 der die Längsgurte bildenden U-oder C-förmigen Querschnittskontur ausgebildeten Führungsschiene 22 aufgehängt und mittels den Rollen gegenüberliegend angeordneter Gleiter 31 aus einem Kunststoffmaterial gegen die Unterseite des unteren Profilsteges 17 der die Längsgurte 2 bildenden U-oder C-förmigen Querschnittskontur abgestützt, wobei den Gleitern 31 ein zusätzlicher vertikal gerichteter Profilsteg 32 als Seitenabstützung in Querrichtung zugeordnet ist. Gemäß der Darstellung in Fig.6, kann aber auch vorgesehen sein, daß die Rungen 1 über um zueinander in einem Winkel, insbesondere einem Winkel von 90°, zueinander ausgerichtete Achsen rotierende Rollen an einer bezüglich deren Querschnittskontur innenliegend angeordneten Führungsschiene der oberen Längsgurte geführt sind.
Bei der Ausführungsform nach Fig 6 ist vorgesehen, daß die Rungen 1 über Gleiter 33 aus einem Kunststoffmaterial gegen die bezüglich des Laderaumes innenliegende Unterkante 34 einer an den unteren Profilschenkel 17 der Querschnittskontur der oberen Längsgurte 2 angeschlossenen Lauf-und Führungsschiene 21 für die der Aufhängung der Seitenplanen 4 abgestützt sind.

Die die oberen Längsgurte 2 des Verdeckgestelles bildende eine in eine im Wesentlichen U-oder C-förmige Querschnittskontur und eine integrierte Hohlprofilform aufweisende Trägerstruktur ist in allen dargestellten Ausführungsformen als Strangpressprofil ausgebildet.

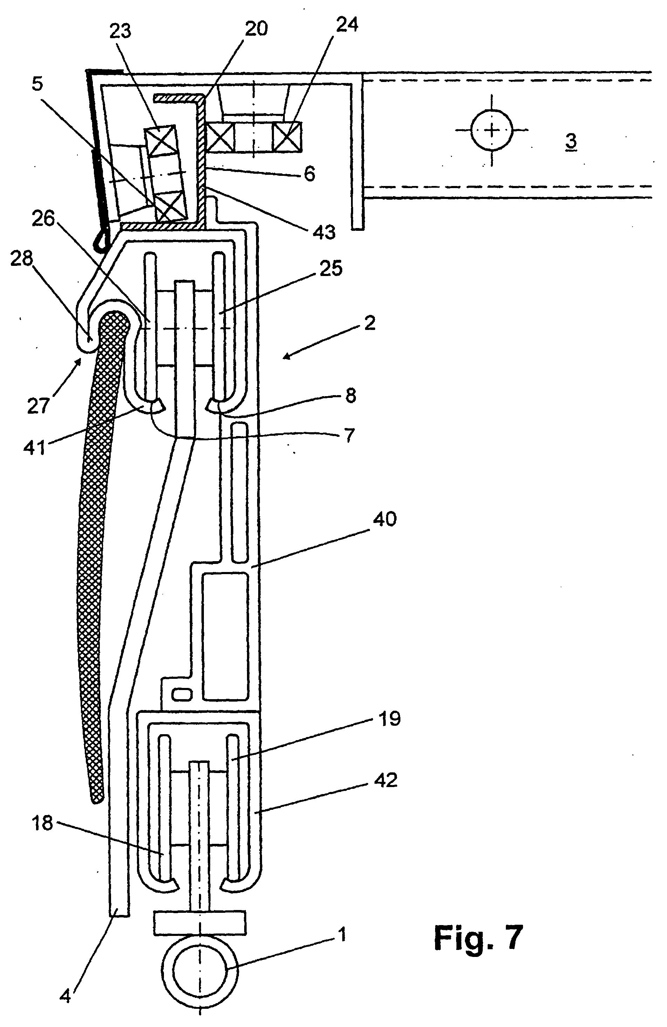

Im Einzelnen ist dabei gemäß der Ausführungsform nach den Fig. 1 bis 4 vorgesehen, daß die die oberen Längsgurte 2 des Verdeckgestelles bildende eine in eine im Wesentlichen U-oder C-förmige Querschnittskontur und eine integrierte Hohlprofilform aufweisende Trägerstruktur zusammen mit den der Aufhängung und Abstützung für die Spriegel 3, die Rungen 1 und die Seitenplanen 4 als einheitliches Strangpressprofil ausgebildet ist.
Bei der Ausführungsform nach Fig. 3 ist weiter vorgesehen, daß die die oberen Längsgurte 2 des Verdeckgestelles bildende, eine im Wesentlichen U-oder C-förmige Querschnittskontur aufweisende Trägerstruktur als Strangpressprofil ausgebildet und mittels eines angeschlossenen eigenständigen Hohlprofiles ausgesteift ist.
Gemäß den in Fig. 7 gezeigten Ausführungsbeispiel sind an eine die oberen Längsgurte des Verdeckgestelles bildende, eine im Wesentlichen U-oder C-förmige Querschnittskontur aufweisende, durch ein Strangpressprofil gebildete Trägerstruktur 40 durch Profilmaterialabschnitte 41, 42, 43 gebildete Lauf-und Führungsschienen wenigstens für die der Abstützung der Spriegel zugeordneten Rollen angeschlossen.

## Patentansprüche

1. Verdecksystem für Nutzfahrzeuge, insbesondere zusammenschiebbares Verdeck für Fahrzeugaufbauten und Container, dessen Verdeckgestell in der Hauptsache aus die Laderaumlänge überspannenden, über aufragende Stützen und Rungen (1) gegen das Fahrzeugchassis abgestützten oberen Längsgurten (2) besteht, bei dem eine Dachabdeckung, insbesondere eine Plane abstützende, bei geschlossenem Verdeck zugleich eine Queraussteifung des oberen Bereiches des Verdeckgestells bewirkende, in Fahrzeuglängsrichtung verschiebliche Spriegel (3) an den oberen Längsgurten (2) abgestützt und die oberen Längsgurte (2) ihrerseits über eine Anzahl in Fahrzeuglängsrichtung längsverschieblicher Rungen (1) zusätzlich gegen das Fahrzeugchassis abgestützt sind, bei dem ferner die Seitenplanen (4) längsverschieblich an den oberen Längsgurten (2) aufgehängt sind, wobei sämtliche Spriegel (3) und Rungen (1) jeweils über Laufrollen (23, 24; 18, 19) in je einer zugeordneten, an den oberen Längsgurten (2) angeordneten Laufbahn (13; 15) abgestützt sind, wobei die Seitenplanen (4) jeweils vermittels einer Anzahl von Rollen (26, 25) in einer weiteren, an den oberen Längsgurten (2) angeordneten Laufbahn (7, 8) aufgehängt sind, wobei die Laufbahnen (13, 15, 14) jeweils für die die Spriegel (3), die die Rungen (1) und die die Seitenplanen (4) abstützenden Rollen (23, 24; 18, 19; 26, 25) übereinanderliegend an den oberen Längsgurten (2) angeordnet sind.

2. Verdecksystem nach Anspruch 1, **dadurch gekennzeichnet, daß** die Laufbahnen (5, 6) für die die Spriegel (3) abstützenden Rollen (23, 24), die Laufbahnen (9, 10) für die die Rungen (1) abstützenden Rollen (18, 19) und die Laufbahnen (7, 8) für die die Seitenplanen (4) abstützenden Rollen (26, 25) wenigstens annähernd in einer vertikalen Ebene übereinanderliegend ausgerichtet-an den oberen Längsgurten (2) angeordnet sind.

3. Verdecksystem nach Anspruch 1 oder 2, **dadurch gekennzeichnet, daß** die oberen Längsgurte (2) des Verdeckgestells eine in eine im wesentlichen U- oder C-förmige Querschnittskontur integrierte Hohlprofilform (11) aufweisen.

4. Verdecksystem nach Anspruch 3, **dadurch gekennzeichnet, daß** die Hohlprofilform (11) im Profilgrund (12) der im wesentlichen U- oder C-förmigen Querschnittskontur der oberen Längsgurte (2) angeordnet ist und die Laufbahnen (5, 6; 9, 10; 7, 8) für die die Spriegel (3), die die Rungen (1) und die die Seitenplanen (4) abstützenden Rollen (23, 24; 18, 19; 26, 25) bildende Lauf- und Führungsschienen (13; 15; 14) an die senkrecht zum Profilgrund (12) gerichteten Profilstege (16, 17) der im wesentlichen U- oder C-förmigen Querschnittskontur angeschlossen sind.

5. Verdecksystem nach einem der Ansprüche 1 bis 4, **dadurch gekennzeichnet, daß** die Spriegel (3), die Rungen (1) und die Seitenplanen (4) jeweils über Rollenpaare (23, 24; 18, 19; 26, 25) an zwei einander bezüglich der vertikalen Längsmittelebene des Querschnittprofils der oberen Längsgurte (2) gegenüberliegenden Laufbahnen (5, 9, 7; 6, 10, 8) von Lauf- und Führungsschienen (13; 15; 14) abgestützt sind.

6. Verdecksystem nach einem der Ansprüche 1 bis 5, **dadurch gekennzeichnet, daß** eine der beiden der Abstützung der Rungen (1) und der Aufhängung der Seitenplanen (4) dienenden Lauf- und Führungsschienen (15; 14) bezüglich der U- bzw. C-förmigen Querschnittskontur der oberen Längsgurte (2) innenliegend angeordnet ist.

7. Verdecksystem nach Anspruch 4, **dadurch gekennzeichnet, daß** die der Abstützung der Spriegel (3) zugeordnete Lauf- und Führungsschiene (13) bezüglich der im wesentlichen U- oder C-förmige Querschnittskontur der oberen Längsgurte (2) außenliegend an deren oberem Profilsteg (16) angeordnet ist.

8. Verdecksystem nach Anspruch 4, **dadurch gekennzeichnet, daß** die der Abstützung der Rungen (1) zugeordnete Lauf- und Führungsschiene (15) bezüglich der im wesentlichen U- oder C-förmige Querschnittskontur der oberen Längsgurte (2) außenliegend an deren unterem Profilsteg (17) angeordnet ist.

9. Verdecksystem nach Anspruch 7 oder 8, **dadurch gekennzeichnet, daß** die oberen Längsgurte (2) mit der offenen Seite ihrer U- oder C-förmigen Querschnittskontur bezüglich des Laderaumes nach außen zeigend angeordnet sind und die der Aufhängung der Seitenplanen (4) zugeordnete Lauf- und Führungsschiene (14) bezüglich der im wesentlichen U- oder C-förmige Querschnittskontur der oberen Längsgurte (2) innenliegend an derem oberem Profilsteg (16) angeordnet ist.

10. Verdecksystem nach einem der Ansprüche 7 bis 9, **dadurch gekennzeichnet, daß** die der Aufhängung der Seitenplanen (4) zugeordnete Lauf- und Führungsschiene (14) bezüglich der im wesentlichen U- oder C-förmigen Querschnittskontur der oberen Längsgurte (2) diagonal ausgerichtet an derem oberem Profilsteg (16) angeordnet ist.

11. Verdecksystem nach einem der Ansprüche 1 bis 10, **dadurch gekennzeichnet, daß** die Spriegel (3), die Rungen (1) und die Seitenplanen (4) jeweils über Paare zueinander koaxial ausgerichteter Rollen (23, 24; 18, 19; 26, 25) an den Laufbahnen (5, 6; 9, 10; 7, 8) der an den oberen Längsgurten (2) angeordneten Lauf- und Führungsschienen (13; 15; 14) abgestützt bzw. aufgehängt sind.

12. Verdecksystem nach einem der Ansprüche 1 bis 10, **dadurch gekennzeichnet, daß** die beiden der Abstützung der Spriegel (3) zugeordneten Rollen (23, 24') um zueinander in einem Winkel ausgerichtete Achsen rotierend angeordnet und diesen Rollen (23, 24') an den Lauf- und Führungsschienen (13) komplementär ausgebildete Laufbahnen (5, 6') zugeordnet sind.

13. Verdecksystem nach einem der Ansprüche 1 bis 10, **dadurch gekennzeichnet, daß** die beiden der Abstützung der Spriegel (3) zugeordneten Rollen (23, 24) um zueinander in einem Winkel von 90° ausgerichtete Achsen rotierend angeordnet und diesen Rollen (23, 24') an T-förmigen Lauf- und Führungsschienen (13) aufeinander senkrecht stehende Laufbahnen (5, 6') zugeordnet sind.

14. Verdecksystem nach einem der Ansprüche 1 bis 12, **dadurch gekennzeichnet, daß** die beiden der Abstützung der Spriegel (3) zugeordneten Rollen (23, 24) um zueinander in einem Winkel von weniger als 90° ausgerichtete Achsen rotierend angeordnet sind, wobei die Achse der die vertikale Abstützung der Spriegel (3) bildenden Rolle (23) gegenüber der Horizontalen geneigt ausgerichtet ist, und wobei die dieser Rolle (23) zugeordnete Laufbahn (5) der zugehörigen Lauf- und Führungsschiene (20) komplementär schräg zur vertikalen Längsmittelebene der Querschnittskontur der oberen Längsgurte (2) ausgerichtet ist.

15. Verdecksystem nach einem der Ansprüche 1 bis 14, **dadurch gekennzeichnet, daß** die den der Abstützung der Spriegel (3) dienenden Rollen (23, 24') zugeordnete Lauf- und Führungsschiene (20) C-förmig ausgebildet ist und mit dem Rücken (25) ihrer Profilform die Laufbahn (6') für eine um eine vertikale Achse rotierende Stützrolle (24') bildet und mit ihrem obenliegenden freien Profilschenkel (26) eine um eine horizontale Achse rotierbare Tragrolle (23) übergreift.

16. Verdecksystem nach einem der Ansprüche 1 bis 15, **dadurch gekennzeichnet, daß** an den oberen Längsgurten (2) des Verdeckgestells bezüglich des Laderaumes außenliegend eine eine nutförmige Einbuchtung (27) zur Aufnahme einer Dichtung aufweisende Profilleiste (28) angeschlossen ist.

17. Verdecksystem nach einem der Ansprüche 1 bis 16, **dadurch gekennzeichnet, daß** die oberen Längsgurte (2) mit der offenen Seite ihrer U- oder C-förmigen Querschnittskontur bezüglich des Laderaumes nach innen zeigend angeordnet sind und die der Abstützung der Rungen (1) zugeordnete Lauf- und Führungsschiene (22) bezüglich der im wesentlichen U- oder C-förmigen Querschnittskontur der oberen Längsgurte (2) innenliegend an derem unterem Profilsteg (17) angeordnet ist.

18. Verdecksystem nach einem der Ansprüche 1 bis 17, **dadurch gekennzeichnet, daß** die Rungen (1) über Rollen (18', 19') hängend an einer an einem unteren Profilsteg (17) der Längsgurte (2) ausgebildeten Führungsschiene aufgehängt und mittels den Rollen (18', 19') gegenüberliegend angeordneter Gleiter (31) aus einem Kunststoffmaterial gegen die oberen Längsgurte (2) abgestützt sind.

19. Verdecksystem nach einem der Ansprüche 1 bis 18, **dadurch gekennzeichnet, daß** die Rungen (1) über um zueinander in einem Winkel, insbesondere einem Winkel von 90° zueinander ausgerichtete Achsen rotierende Rollen (Fig. 6) an einer bezüglich deren Querschnittskontur innenliegend angeordneten Führungsschiene (14) der oberen Längsgurte (2) geführt sind.

20. Verdecksystem nach einem der Ansprüche 1 bis 19, **dadurch gekennzeichnet, daß** die Rungen (1) über Gleiter (33) aus einem Kunststoffmaterial gegen die bezüglich des Laderaumes innenliegende Unterkante (34) einer an den unteren Profilschenkel (17) der Querschnittskontur der oberen Längsgurte (2) angeschlossenen Lauf- und Führungsschiene (15) für die Aufhängung der Seitenplanen (4) abgestützt sind.

21. Verdecksystem nach einem der Ansprüche 1 bis 20, **dadurch gekennzeichnet, daß** die die oberen Längsgurte (2) des Verdeckgestells bildende, eine im wesentlichen U- oder C-förmige Querschnittskontur und eine integrierte Hohlprofilform (11) aufweisende Trägerstruktur als Strangpressprofil ausgebildet ist.

22. Verdecksystem nach Anspruch 21, **dadurch gekennzeichnet, daß** die die oberen Längsgurte (2) des Verdeckgestells bildende, eine im wesentlichen U- oder C-förmige Querschnittskontur und eine integrierte Hohlprofilform (11) aufweisende Trägerstruktur zusammen mit den der Aufhängung und Abstützung für die Spriegel (3), die Rungen (1) und die Seitenplanen (4) als einheitliches Strangpressprofil ausgebildet ist.

23. Verdecksystem nach einem der Ansprüche 1 bis 20, **dadurch gekennzeichnet, daß** die die oberen Längsgurte (2) des Verdeckgestells bildende, eine im wesentlichen U- oder C-förmige Querschnittskontur aufweisende Trägerstruktur (40) als Strangpressprofil ausgebildet und mittels eines angeschlossenen eigenständigen Hohlprofils ausgesteift ist.

24. Verdecksystem nach einem der Ansprüche 1 bis 20, **dadurch gekennzeichnet, daß** an die die oberen Längsgurte des Verdeckgestells bildende, eine im wesentlichen U- oder C-förmige Querschnittskontur aufweisende, durch ein Strangpressprofil gebildete Trägerstruktur (40) durch Profilmaterialabschnitte gebildete Lauf- und Führungsschienen (43) wenigstens für die der Abstützung der Spriegel (3) zugeordneten Rollen (23, 24) angeschlossen sind.

25. Verdecksystem nach einem der Ansprüche 1 bis 24, **dadurch gekennzeichnet, daß** die Spriegel (3) und/oder die Rungen (1) sowie gegebenenfalls die Seitenplanen (4) über mit jeweils zwei Paaren von Rollen ausgestattete Rollenwagen an den Lauf- und Führungsschienen der oberen Längsgurte (2) abgestützt und aufgehängt sind.

## Claims

1. Top system for utility vehicles, in particular a folding top for vehicle superstructures and containers, the top frame of which predominantly consists of the upper longitudinal straps (2) bridging the length of the loading space and supported via upwardly projecting posts and uprights (1) against the vehicle chassis, wherein a roof covering, in particular a roof arch (3) supporting a tarpaulin, simultaneously effecting transverse reinforcing of the upper region of the top frame when the top is closed, and displaceable in the longitudinal direction of the vehicle, is supported on the upper longitudinal straps (2) and the upper longitudinal straps (2) are in turn additionally supported, via a number of uprights (1) longitudinally displaceable in the longitudinal direction of the vehicle, against the vehicle chassis, wherein the side tarpaulins (4) are also longitudinally displaceably suspended on the upper longitudinal straps (2), wherein all roof arches (3) and uprights (1) are supported via respective rollers (23, 24; 18, 19) in a respectively associated track (13, 15) arranged on the upper longitudinal straps (2), wherein the side tarpaulins (4) are each suspended by means of a number of rollers (26, 25) in a further track (7, 8) arranged on the upper longitudinal straps (2), wherein the tracks (13, 15, 14) are arranged superimposed on the upper longitudinal straps (2) for the rollers (23, 24; 18, 19; 26, 25) supporting the roof arches (3), the uprights (1) and the side tarpaulins (4) respectively.

2. Top systems according to claim 1, **characterised in that** the tracks (5, 6) for the rollers (23, 24) supporting the roof arches (3), the tracks (9, 10) for the rollers (18, 19) supporting the uprights (1) and the tracks (7, 8) for the rollers (26, 25) supporting the side tarpaulins (4) are arranged, at least approximately in a vertical plane, oriented in a superimposed manner on the upper longitudinal straps (2).

3. Top system according to claim 1 or 2, **characterised in that** the upper longitudinal straps (2) of the top frame comprise a hollow profiled shape (11) integrated in a substantially U- or C-shaped cross-sectional contour.

4. Top system according to claim 3, **characterised in that** the hollow profiled shape (11) is arranged in the profiled base (12) of the substantially U- or C-shaped cross-sectional contour of the upper longitudinal straps (2), and the roller rails and guide rails (13; 15; 14) forming the tracks (5, 6; 9, 10; 7, 8) for the rollers (23, 24; 18, 19; 26, 25) supporting the roof arches (3), the uprights (1) and the side tarpaulins (4) are connected to the profiled webs (16, 17), oriented perpendicularly to the profiled base (12), of the substantially U- or C-shaped cross-sectional contour.

5. Top system according to any of claims 1 to 4, **characterised in that** the roof arches (3), the uprights (1) and the side tarpaulins (4) are each supported via pairs of rollers (23, 24; 18, 19; 26, 25) on two tracks (5, 9, 7; 6, 10, 8) of roller and guide rails (13; 15; 14) opposing one another with respect to the vertical longitudinal centre plane of the cross-sectional profile of the upper longitudinal straps (2).

6. Top system according to any of claims 1 to 5, **characterised in that** one of the two roller and guide rails (15; 14) serving to support the uprights (1) and to suspend the side tarpaulins (4) is arranged inwardly with respect to the U- or C-shaped cross-sectional contour of the longitudinal belts (2).

7. Top system according to claim 4, **characterised in that** the roller and guide rail (13) associated with support of the roof arches (3) is arranged outwardly with respect to the substantially U- or C-shaped cross-sectional contour of the upper longitudinal straps (2), on the upper profiled web (16) thereof.

8. Top system according to claim 4, **characterised in that** the roller and guide rail (15) associated with support of the uprights (1) is arranged outwardly with respect to the substantially U- or C-shaped cross-sectional contour of the upper longitudinal straps (2), on the lower profiled web (17) thereof.

9. Top system according to claim 7 or 8, **characterised in that** the upper longitudinal straps (2) are arranged with the open side of their U- or C-shaped cross-sectional contour so as to point outwards with respect to the loading space, and the roller and guide rail (14) associated with suspension of the side tarpaulins (4) is arranged inwardly with respect to the substantially U- or C-shaped cross-sectional contour of the longitudinal straps (2), on the upper profiled web (16) thereof.

10. Top system according to any of claims 7 to 9, **characterised in that** the roller and guide rail (14) associated with suspension of the side tarpaulins (4) is arranged diagonally oriented with respect to the substantially U- or C-shaped cross-sectional contour of the upper longitudinal straps (2), on the upper profiled web (16) thereof.

11. Top system according to any of claims 1 to 10, **characterised in that** the roof arches (3), the uprights (1) and the side tarpaulins (4) are each supported or suspended via pairs of rollers (23, 24; 18, 19; 26, 25), oriented coaxially to one another, on the tracks (5, 6; 9, 10; 7, 8) of the roller and guide rails (13; 15, 14) arranged on the upper longitudinal straps (2).

12. Top system according to any of claims 1 to 10, **characterised in that** the two rollers (23, 24') associated with support of the roof arches (3) are arranged to rotate about axes oriented at an angle to one another and complementary tracks (5, 6') are associated with these rollers (23, 24') on the roller and guide rails (13).

13. Top system according to any of claims 1 to 10, **characterised in that** the two rollers (23, 24) associated with support of the roof arches (3) are arranged to rotate about axes oriented at an angle of 90° to one another, and tracks (5, 6') located perpendicularly on top of each other on T-shaped roller and guide rails (13) are associated with these rollers (23, 24').

14. Top system according to any of claims 1 to 12, **characterised in that** the two rollers (23, 24) associated with support of the roof arches (3) are arranged to rotate about axes oriented at an angle of less than 90° to one another, the axis of the roller (23) forming the vertical support of the roof arches (3) being inclined with respect to the horizontal, and the track (5) of the associated roller and guide rail (23) associated with this roller (23) is oriented in a complementary manner obliquely to the vertical longitudinal centre plane of the cross-sectional contour of the upper longitudinal straps (2).

15. Top system according to any of claims 1 to 14, **characterised in that** the roller and guide rail (20) associated with the rollers (23, 24') serving to support the roof arches (3) is C-shaped in design and with the back (25) of its profiled shape forms the track (6') for a support roller (24') rotating about a vertical axis and with its upper free profiled leg (26) overlaps a support roller (23) which is rotatable about a horizontal axis.

16. Top system according to any of claims 1 to 15, **characterised in that** a profiled strip (28) comprising a grooved indentation (27) for receiving a seal, is connected to the upper longitudinal straps (2) of the top frame, outwardly with respect to the loading space.

17. Top system according to any of claims 1 to 16, **characterised in that** the upper longitudinal straps (2) are arranged with the open side of their U- or C-shaped cross-sectional contour so as to point inwards with respect to the loading space, and the roller and guide rail (22) associated with the support of the uprights (1) is arranged inwardly with respect to the substantially U- or C-shaped cross-sectional contour of the upper longitudinal straps (2), on the lower profiled web (17) thereof.

18. Top system according to any of claims 1 to 17, **characterised in that** the uprights (1) suspended via rollers (18, 19') are suspended on a guide rail formed on a lower profiled web (17) of the longitudinal straps (2) and are supported by means of sliders (31) made of plastics material arranged opposite the rollers (18', 19'), against the upper longitudinal straps (2).

19. Top system according to any of claims 1 to 18, **characterised in that** the uprights (1) are guided via rollers (Fig. 6) rotating about axes oriented at an angle to one another, in particular at an angle of 90° to one another, on a guide rail (14) of the upper longitudinal straps (2) arranged inwardly with respect to the cross-sectional contour of the rollers.

20. Top system according to any of claims 1 to 19, **characterised in that** the uprights (1) are supported via sliders (33) made of a plastics material against the lower edge (34) located inwardly with respect to the loading space of a roller and guide rail (15) connected to the lower profiled leg (17) of the cross-sectional contour of the upper longitudinal straps (2) for suspending the side tarpaulins (4).

21. Top system according to any of claims 1 to 20, **characterised in that** the carrying structure forming the upper longitudinal straps (2) of the top frame and comprising a substantially U- or C-shaped cross-sectional contour and an integrated hollow profiled shape (11) is formed as an extruded section.

22. Top system according to claim 21, **characterised in that** the carrying structure forming the upper longitudinal straps (2) of the top frame and comprising a substantially U- or C-shaped cross-sectional contour and an integrated hollow profiled shape (11) is formed together with that for the suspension and support of the roof arches (3), the uprights (1) and the side tarpaulins (4) as a unified extruded section.

23. Top system according to any of claims 1 to 20, **characterised in that** the carrying structure (40) forming the upper longitudinal straps (2) of the top frame and comprising a substantially U- or C-shaped cross-sectional contour is formed as an extruded section and is reinforced by means of a connected, independent hollow profile.

24. Top system according to any of claims 1 to 20, **characterised in that** roller and guide rails (43) formed by profiled material sections, at least for the rollers (23, 24) associated with support of the roof arches (3), are connected to the carrying structure (40) forming the upper longitudinal straps of the top frame and comprising a substantially U- or C-shaped cross-sectional contour and formed by an extruded section.

25. Top system according to any of claims 1 to 24, **characterised in that** the roof arches (3) and/or the uprights (1) and optionally the side tarpaulins (4) are supported and suspended on the roller and guide rails of the upper longitudinal straps (2) via roller carriages equipped with two respective pairs of rollers.

## Revendications

1. Système de toit pour véhicules utilitaires, en particulier pour toit escamotable pour carrosseries de véhicule et conteneurs, dont le bâti de toit se compose principalement de membrures longitudinales supérieures (2) s'étendant sur la longueur du compartiment à marchandises, et supportées du côté du châssis de véhicule par des supports et des montants (1) verticaux,
dans lequel des arceaux (3) mobiles dans la direction longitudinale du véhicule, réalisant en même temps lorsque le toit est fermé un renforcement transversal de la région supérieure du bâti de toit et supportant une couverture de toit, en particulier une bâche, sont supportés au niveau des membrures longitudinales supérieures (2) et de plus les membrures longitudinales supérieures (2) sont soutenues de leur côté par un certain nombre de montants (1) mobiles transversalement dans la direction longitudinale du véhicule du côté du châssis du véhicule,
et dans lequel en outre les bâches latérales (4) sont suspendues, mobiles longitudinalement, aux membrures longitudinales supérieures (2),
tous les arceaux (3) et montants (1) étant supportés à chaque fois par des galets de roulement (23, 24 ; 18, 19) associés chacun à un chemin de roulement (13 ; 15) agencé sur les membrures longitudinales supérieures (2),
les bâches latérales (4) étant chacune suspendues au moyen d'un certain nombre de galets (26, 25) dans un autre chemin de roulement (7, 8) agencé sur les membrures longitudinales supérieures (2),
les chemins de roulement (13, 15, 14) destinés chacun aux galets (23, 24 ; 18, 19 ; 26, 25) soutenant les arceaux (3), les montants (1) et les bâches latérales étant agencés les uns au-dessus des autres sur les membrures longitudinales supérieures (2).

2. Système de toit selon la revendication 1, **caractérisé en ce que** les chemins de roulement (5. 6) destinés aux galets (23, 24) supportant les arceaux (3), les chemins de roulement (9, 10) destinés aux galets (18, 19) supportant les montants (1), et les chemins de roulement (7, 8) destinés aux galets (25, 26) supportant les bâches latérales (4), sont agencés au moins approximativement dans un plan vertical en étant dirigés les uns au-dessus des autres sur les membrures longitudinales supérieures (2).

3. Système de toit selon la revendication 1 ou 2, **caractérisé en ce que** les membrures longitudinales supérieures (2) du bâti de toit ont une forme en profilé creux (11) intégrée dans le contour en coupe transversale sensiblement en U ou en C.

4. Système selon la revendication 3, **caractérisé en ce que** la forme en profilé creux (11) est agencée dans la base de profilé (12) du contour en coupe transversale sensiblement en U ou en C des membrures longitudinales supérieures (2), et **en ce que** des glissières de guidage et de roulement (13 ; 15 ; 14) formant les chemins de roulement (5, 6 ; 9, 10 ; 7, 8) destinés aux galets (23, 24 ; 18, 19 ; 26, 25) supportant les arceaux (3), les montants (1) et les bâches latérales (4) sont raccordées aux ailes de profilé (16, 17) orientées perpendiculairement à la base de profilé (12) du contour en coupe transversale sensiblement en U ou en C.

5. Système de toit selon l'une des revendications 1 à 4, **caractérisé en ce que** les arceaux (3), les montants (1) et les bâches latérales (4) sont supportés chacun par des paires de galets (23, 24 ; 18. 19 ; 26, 25) sur deux chemins de roulement, opposés l'un à l'autre par rapport au plan médian longitudinal vertical du profilé en coupe transversale des membrures longitudinales supérieures (2), des glissières de guidage et de roulement (13 ; 15 ; 14).

6. Système de toit selon les revendications 1 à 5, **caractérisé en ce que** l'une des deux glissières de guidage et de roulement (15 ; 14), servant au support des montants (1) et à la suspension des bâches latérales (4) est agencée du côté intérieur par rapport au contour en coupe transversale en U ou en C des membrures longitudinales supérieures (2).

7. Système de toit selon la revendication 4, **caractérisé en ce que** la glissière de guidage et de roulement associée au soutien des arceaux (3) est agencée du côté extérieur par rapport au contour en coupe transversale sensiblement en U ou en C des membrures longitudinales supérieures (2) sur l'aile de profilé supérieure (16).

8. Système de toit selon la revendication 4, **caractérisé en ce que** la glissière de guidage et de roulement associée au support des montants (1) est agencée du côté extérieur par rapport au contour en coupe transversale sensiblement en U ou en C des membrures longitudinales supérieures (2) sur l'aile de profilé inférieure (17).

9. Système de toit selon la revendication 7 ou 8, **caractérisé en ce que** les membrures longitudinales supérieures (2) sont agencées avec le côté ouvert de leur contour en coupe transversale en U ou en C pointant vers l'extérieur par rapport au compartiment à marchandises, et **en ce que** la glissière de guidage et de roulement (14) associée à la suspension des bâches latérales (4) est agencée du côté intérieur par rapport au contour en coupe transversale sensiblement en U ou en C des membrures longitudinales supérieures (2) sur l'aile de profilé supérieure (16).

10. Système de toit selon l'une des revendications 7 à 9, **caractérisé en ce que** la glissière de guidage et de roulement (14) associée à la suspension des bâches latérales (4) est agencée en diagonale par rapport au contour en coupe transversale sensiblement en U ou en C des membrures longitudinales supérieures (2) sur l'aile de profilé supérieure (16).

11. Système de toit selon l'une des revendications 1 à 10, **caractérisé en ce que** les arceaux (3), les montants (1) et les bâches latérales (4) sont supportés ou suspendus par des paires de galets dirigés coaxialement les uns aux autres sur les chemins de roulement (5, 6 ; 9, 10 ; 7, 8) des glissières de guidage et de roulement (13; 15 ;14) agencés sur les membrures longitudinales supérieures (2).

12. Système selon l'une des revendications 1 à 10, **caractérisé en ce que** les deux galets (23, 24') associés au support des arceaux (3) sont agencés à rotation autour d'axes orientés en faisant un angle entre eux et ces galets (23, 24') sont associés à des chemins de roulement (5, 6') conformés de façon complémentaire sur les glissières de guidage et de roulement (13).

13. Système de toit selon l'une des revendications 1 à 10, **caractérisé en ce que** les deux galets (23, 24') associés au support des arceaux (3) son agencés à rotation autour d'axes orientés en faisant un angle de 90° entre eux et ces galets (23, 24') sont associés à des chemins de roulement (5, 6') perpendiculaires entre eux sur des glissières de guidage et de roulement (13) en forme de T.

14. Système de toit selon l'une des revendications 1 à 12, **caractérisé en ce que** les deux galets (23, 24) associés au support des arceaux (3) sont agencés à rotation autour d'axes orientés suivant un angle inférieur à 90°, l'axe du galet (23) qui forme le support vertical des arceaux (3) étant incliné par rapport à l'horizontale, et le chemin de roulement (5), associé à ce galet (23), de la glissière de guidage et de roulement associée (20) est incliné de façon complémentaire par rapport au plan médian longitudinal vertical du contour en coupe transversale des membrures longitudinales supérieures (2).

15. Système de toit selon l'une des revendications 1 à 14, **caractérisé en ce que** la glissière de guidage et de roulement (20) associée aux galets (23, 24') servant de support des arceaux (3) est conformée en C et forme avec le dos de sa forme profilée le chemin de roulement (6') destiné à un galet de support (24') tournant autour d'un axe vertical et s'engage avec la branche de profilé libre (26) se trouvant au-dessus sur un galet de support rotatif (23) autour d'un axe horizontal.

16. Système de toit selon l'une des revendications 1 à 15, **caractérisé en ce qu'**une baguette profilée (28) comportant un creux (27) en forme de gorge destiné à recevoir une garniture d'étanchéité est raccordée du côté extérieur aux membrures longitudinales supérieures (2) du bâti de toit par rapport au compartiment à marchandises.

17. Système de toit selon l'une des revendications 1 à 16, **caractérisé en ce que** les membrures longitudinales supérieures (2) sont agencées, avec le côté ouvert de leur contour en coupe transversale en U ou en C par rapport au compartiment à marchandises, de façon à pointer vers l'intérieur et la glissière de guidage et de roulement (22) associée au support des montants (1) est agencée par rapport au contour en coupe transversale sensiblement en U ou en C des membrures longitudinales supérieures (2) du côté intérieur sur l'aile de profilé inférieure (17).

18. Système de toit selon l'une des revendications 1 à 17, **caractérisé en ce que** les montants sont suspendus via des galets (18', 19') à une glissière de guidage conformée sur une aile de profilé inférieure (17) des membrures longitudinales (2) et des éléments de glissement opposés (31) en matière plastique sont supportés en direction des membrures longitudinales supérieures (2).

19. Système de toit selon l'une des revendications 1 à 18, **caractérisé en ce que** les montants (1) sont guidés par des galets (figure 6) tournant autour d'axes orientés en faisant un angle entre eux, en particulier un angle de 90°, sur une glissière de guidage (14), agencée du côté intérieur par rapport à son contour en coupe transversale, des membrures longitudinales supérieures (2).

20. Système de toit selon l'une des revendications 1 à 19, **caractérisé en ce que** les montants (1) sont supportés par des éléments de glissement (33) en matière plastique du côté du bord inférieur (34), se trouvant du côté intérieur par rapport au compartiment à marchandises, d'une glissière de guidage et de roulement (15) raccordée à la branche de profilé inférieure (17) du contour en coupe transversale des membrures longitudinales supérieures (2) et destinée à la suspension des bâches latérales (4).

21. Système de toit selon l'une des revendications 1 à 20, **caractérisé en ce que** la structure porteuse formant les membrures longitudinales supérieures (2) du bâti de toit et présentant un contour en coupe transversale sensiblement en U ou en C et une forme de profilé creux intégrée est conformée en profilé extrudé.

22. Système de toit selon la revendication 21, **caractérisé en ce que** la structure porteuse formant les membrures longitudinales supérieures (2) du bâti de toit et présentant un contour de section sensiblement en U ou en C et une forme de profilé creux intégrée est conformée conjointement avec la suspension et le support pour les arceaux (3), les montants (1) et les bâches latérales (4) en profilé extrudé homogène.

23. Système de toit selon l'une des revendications 1 à 21, **caractérisé en ce que** la structure porteuse (40) formant les membrures longitudinales supérieures (2) du bâti de toit et présentant un contour en coupe transversale sensiblement en U ou en C est conformée en profilé creux et est renforcée au moyen d'un profilé creux autonome raccordé.

24. Système de toit selon l'une des revendications 1 à 20, **caractérisé en ce que** des glissières de guidage et de roulement (43), formées par des sections de matériau profilé, au moins destinées aux galets (23, 24) associés au support des arceaux (3) sont raccordées à la structure porteuse (40) formée par un profilé extrudé, formant les membrures longitudinales supérieures du bâti de toit et ayant un contour en coupe transversale sensiblement en U ou en C.

25. Système de toit selon l'une des revendications 1 à 24, **caractérisé en ce que** les arceaux (3) et/ou les montants (1) ainsi que le cas échéant les bâches latérales (4) sont supportés et suspendus aux glissières de guidage et de roulement des membrures longitudinales supérieures (2) au moyen de chariots à galets dotés chacun de deux paires de galets.
